# FASCICULE DE BREVET EUROPEEN

(11) **EP 0 644 113 B1**
(45) Date de publication et mention de la délivrance du brevet: **15.10.1997**
(21) Numéro de dépôt: 94401950.4
(22) Date de dépôt: 02.09.1994
(51) Int. Cl.: B64C 1/22, B64D 9/00

(54) **Dispositif élévateur pour charger et décharger des charges**
Hebevorrichtung zum Laden und Entladen von Stückgut
Lifting device for loading and unloading unit loads

(30) Priorité: 20.09.1993 FR 9311159
(43) Date de publication de la demande: 22.03.1995
(73) Titulaire: AEROSPATIALE SOCIETE NATIONALE INDUSTRIELLE, 75016 Paris (FR)
(72) Inventeur: Cambon, Jean-Louis, F-31270 Cugnaux (FR); Farre, Michel, F-31790 Leguevin (FR); l'Heritier, Michel, F-31770 Colomiers (FR)
(74) Mandataire: Bonnetat, Christian

(56) Documents cités:
- AU-B- 605 680
- FR-A- 2 240 863
- FR-A- 2 577 883
- GB-A- 1 139 878
- SU-A- 175 827
- US-A- 3 885 685

## Description

La présente invention concerne un dispositif élévateur pour permettre le chargement et/ou le déchargement de charges à bord d'aéronefs.

Quoique non exclusivement, le dispositif est plus particulièrement destiné aux aéronefs tels que les avions du type cargo ou dénommé combi pax/cargo, dont le seuil de chargement se trouve à un niveau élevé.

Si le chargement ou le déchargement de charges ne soulève pas de difficultés majeures dans des avions équipés, à leur arrière relevé, d'une porte susceptible de former une rampe d'accès, en revanche, il n'en va pas de même lorsque ces charges doivent être disposées sur un pont accessible par une porte latérale dudit avion. En effet, pour transférer les charges du sol vers ledit pont de l'aéronef ou réciproquement, on utilise alors soit des dispositifs élévateurs au sol, soit des dispositifs de chargement intégrés à l'avion. Dans le premier cas, seuls des aéroports ayant des infrastructures suffisantes sont généralement équipés de ce genre de dispositifs élévateurs déplaçables, dont on amène l'extrémité supérieure au niveau du pont pour procéder par la suite au chargement ou au déchargement des charges. Dans le second cas, les dispositifs de chargement intégrés ne peuvent desservir que le type spécifique d'avions à bord desquels ils sont installés.

Un tel dispositif de chargement intégré est par exemple décrit dans le document GB-A-1 139 878, qui concerne un dispositif élévateur pour charger et décharger des charges par l'ouverture d'une porte d'un aéronef, relié à la structure dudit aéronef, à proximité de ladite ouverture, et comportant :
- une rampe susceptible de reposer, de façon inclinée, sur le sol par l'intermédiaire d'organes d'appui ;
- une plate-forme de support reliée de façon coulissante à ladite rampe, et recevant lesdites charges ; et
- des moyens d'entraînement de ladite plate-forme par rapport à la rampe.

On se rend donc compte que les dispositifs actuellement en service sont limités dans leur capacité d'intervention (aérodromes équipés ou avions cargos spécifiques), et qu'ils ne permettent donc pas de répondre totalement au besoin, par exemple, lors d'opérations militaires ou humanitaires sur des aérodromes peu équipés ou sur des sols inégaux, dans les cas de chargement ou de déchargement de charges lourdes et/ou volumineuses.

La présente invention a pour but de remédier à ces inconvénients et concerne un dispositif élévateur pouvant être monté, temporairement ou non, sur des aéronefs sans procéder de plus à des transformations coûteuses sur ces derniers.

A cet effet, le dispositif élévateur pour charger et décharger des charges par l'ouverture d'une porte d'un aéronef, du type mentionné ci-dessus, est caractérisé, selon l'invention, en ce qu'il comprend une glissière qui est susceptible d'être associée à ladite structure par des moyens de liaison amovibles et dans laquelle est guidée ladite rampe.

Ainsi, le caractère amovible du dispositif lui permet d'être soit embarqué à bord de l'aéronef, et donc transportable et mis en place jusque sur des aérodromes non équipés ou sur des sols inégaux, ou bien alors stocké dans les aérodromes de façon usuelle.

En effet, le dispositif élévateur peut occuper une position déployée pour laquelle, articulé audit aéronef, ladite plate-forme assure le transfert des charges en coulissant le long de la rampe inclinée, et une position repliée pour laquelle il peut être soit rentré à l'intérieur de l'aéronef (la plate-forme étant rabattue contre la rampe qui sont toutes deux amenées sur le plancher en coulissant dans la glissière articulée, laquelle est ensuite rabattue vers l'intérieur, la porte de l'aéronef pouvant alors être fermée), soit désaccouplé dudit aéronef (ladite glissière est déverrouillée de ladite structure de l'aéronef).

Dans un exemple de réalisation, ledit dispositif est lié à l'encadrement inférieur délimitant ladite ouverture. Dans ce cas, lesdits moyens de liaison amovibles de ladite glissière audit encadrement inférieur peuvent être définis par des articulations cylindriques axes-crochets de verrouillage, lesdits axes étant alignés et portés, par exemple, par ladite glissière, tandis que lesdits crochets de verrouillage sont fixés audit encadrement inférieur.

Les moyens de liaison sont tels que la glissière peut être alors soit verrouillée et immobilisée en rotation par rapport à la structure de l'aéronef, notamment durant le coulissement de la rampe dans la glissière pour mettre en place ou replier le dispositif, soit verrouillée librement en rotation, lors du chargement ou du déchargement des charges ou lors de son pivotement pour rentrer ou sortir, avec la rampe, dudit aéronef, soit libérée de la structure de l'aéronef.

Dans un autre exemple préféré de réalisation, le dispositif selon l'invention est avantageusement lié à un faux plancher rigide rapporté fixement sur le plancher d'origine dudit aéronef. En effet, la coopération du dispositif avec l'encadrement inférieur délimitant, dans son fuselage, l'ouverture peut parfois être techniquement à déconseiller en raison des efforts importants qui sont susceptibles de se produire au niveau de l'encadrement inférieur, lors des différentes phases de fonctionnement du dispositif. Dans cet exemple de réalisation préféré, on évite d'éventuelles déformations de la structure même du fuselage, car la liaison amovible du dispositif à un faux plancher rigide, fixé au pont de l'aéronef, garantit une reprise des efforts optimale, sollicitant le moins possible l'encadrement de la porte.

Dans cet exemple préféré de réalisation, lesdits moyens de liaison peuvent comprendre alors :
- une pièce qui forme un renvoi d'articulation et à laquelle sont reliés, autour d'un premier et d'un second axes parallèles respectifs, ledit faux plancher et ladite glissière ;
- des broches susceptibles d'immobiliser en rotation, autour dudit premier axe, ladite pièce sur ledit faux plancher ;
- deux bielles élastiques prévues respectivement de part et d'autre de ladite glissière ; et
- des mécanismes de verrouillage de ladite glissière, fixés audit faux plancher et coopérant avec lesdites bielles élastiques, dont les extrémités sont respectivement reliées auxdits mécanismes correspondants et à ladite glissière autour d'axes, parallèles auxdits premier et second axes.

Bien évidemment, ces moyens de liaison assurent les mêmes fonctions à la glissière, que celles énoncées ci-dessus. Plus particulièrement, lesdits mécanismes de verrouillage sont identiques et chacun d'eux se compose d'une semelle en forme de U, dont la base est fixée audit faux plancher et dont les flancs latéraux sont pourvus de lumières oblongues dans lesquelles peut coulisser l'axe de ladite bielle, et de systèmes à cliquets articulés, commandables par un actionneur et susceptibles de verrouiller en position ledit axe de la bielle contre l'un ou l'autre des fonds arrondis desdites lumières.

Avantageusement, les mécanismes de verrouillage associés auxdites bielles sont alors commandés par un même actionneur, un arbre de conjugaison coaxial audit premier axe traversant ledit faux plancher pour relier les mécanismes de verrouillage.

De préférence, ladite glissière présente une section transversale en forme de U, dont la base est destinée à coopérer avec ladite structure par l'intermédiaire des moyens de liaison, et entre les parois latérales de laquelle est guidée et maintenue ladite rampe. Aussi, la hauteur de ladite glissière est telle qu'elle permet un maintien et un guidage convenables de ladite rampe, ainsi qu'un encombrement réduit à l'intérieur dudit aéronef, lorsque ladite glissière y est rabattue autour desdits moyens de liaison amovibles.

Par ailleurs, lesdits organes d'appui sont définis par des vérins prévus à la base de ladite rampe et susceptibles de s'appliquer contre le sol. Ces vérins stabilisent la rampe du dispositif sur le sol et corrigent en outre le déplacement relatif de la glissière par rapport à la rampe, produit par l'affaissement des amortisseurs du train d'atterrissage de l'avion, lors de son chargement.

Dans un mode préféré de la réalisation, lesdits moyens d'entraînement de ladite plate-forme par rapport à la rampe comprennent au moins un chariot déplaçable, susceptible de coulisser le long de guides prévus sur ladite rampe pour amener ladite plate-forme de sa position basse à sa position haute, et inversement. Dans ce cas, ladite plate-forme est alors avantageusement reliée audit chariot déplaçable par l'intermédiaire d'au moins un mécanisme à parallélogramme déformable dont les quatre axes de pivotement, opposés deux à deux, sont parallèles à la liaison de ladite glissière à la structure dudit aéronef et, donc, perpendiculaires à la direction de déplacement dudit chariot le long de la rampe, et d'au moins un vérin ou analogue, reliant ledit chariot à ladite plate-forme et permettant de lever ou d'abaisser ladite plate-forme par rapport à la rampe, par l'intermédiaire du mécanisme à parallélogramme déformable. Plus particulièrement, ledit mécanisme à parallélogramme déformable est constitué, pour son bras supérieur, par un élément rigide dont les extrémités sont liées, autour des axes correspondants, à ladite plate-forme et audit chariot, et pour son bras inférieur, par un vérin ou analogue articulé à ses extrémités, autour des deux autres axes, à ladite plate-forme et audit chariot, et susceptible de rabattre ladite plate-forme contre la rampe ou inversement, lorsqu'il est actionné.

Dans le cas présent, plusieurs mécanismes déformables sont prévus en raison de la largeur de la plate-forme qui est fonction de celle de l'ouverture. L'ensemble de ces mécanismes permet, par l'intermédiaire des vérins :
- d'adapter la plate-forme au relief du sol rencontré, surtout sur des sols inégaux ;
- d'amener la plate-forme en position horizontale et de la maintenir dans cette position pendant la montée ou la descente le long de la rampe ;
- de replier relativement la plate-forme contre la rampe ; et
- de rattraper la différence de niveau due à la hauteur d'encastrement du chariot sur la rampe.

Selon une autre caractéristique, un mécanisme moteur est prévu à l'intérieur dudit aéronef pour, d'une part, transférer lesdites charges de ladite plate-forme en position haute à l'intérieur dudit aéronef et inversement, et d'autre part, assurer la rentrée ou la sortie de l'ensemble constitué de la rampe, de la glissière et de la plate-forme dans ou hors dudit aéronef. Ainsi, on peut motoriser les différentes phases de fonctionnement du dispositif. Par exemple, ledit mécanisme moteur peut comprendre au moins un treuil fixé à l'intérieur dudit aéronef, du côté opposé à ladite ouverture, et équipé de câbles qui s'enroulent autour de poulies respectives pour se fixer respectivement de part et d'autre de la base de ladite rampe lors de son hissage à l'intérieur dudit aéronef, ou auxdites charges à transférer.

Bien évidemment, lesdits organes d'appui, lesdits moyens d'entraînement et lesdits vérins des mécanismes à parallélogramme déformable sont commandés par une source de puissance, par exemple hydraulique, prévue sur ladite rampe. Ladite source peut alors être alimentée, soit par un circuit de puissance de l'aéronef, soit par un banc de puissance au sol.

Avantageusement, afin que le dispositif soit aisément transportable, des organes de roulement peuvent être associés à ladite plate-forme pour amener le dispositif, en position repliée, vers un hangar de stockage ou vers un avion à charger ou à décharger.

Les figures du dessin annexé feront bien comprendre comment l'invention peut être réalisée. Sur ces figures, des références identiques désignent des éléments semblables.

La figure 1 montre schématiquement un premier exemple de réalisation dudit dispositif élévateur selon l'invention, en position déployée et fixé à un avion, pour permettre le chargement de charges à l'intérieur de celui-ci.

Les figures 2 et 3 sont respectivement et schématiquement des vues de dessus et latérale du dispositif montré sur la figure 1 et lié à l'avion.

Les figures 4A, 4B, 4C et 4D représentent schématiquement les principales séquences de fonctionnement pour replier ledit dispositif élévateur et l'amener à l'intérieur du fuselage dudit avion.

Les figures 5A et 5B représentent schématiquement les principales séquences de fonctionnement pour libérer ledit dispositif dudit avion et le replier.

La figure 6 représente schématiquement un second exemple préféré de réalisation dudit dispositif selon l'invention, dans une position analogue à celle de la figure 1.

La figure 7 est une vue de dessus dudit dispositif montré sur la figure 6.

La figure 8 est une vue en perspective partielle des moyens de liaison reliant ladite glissière du dispositif audit faux plancher rigide.

Les figures 9A, 9B, 9C et 9D illustrent quatre positions occupées par ladite plate-forme par rapport aux moyens de déplacement à chariots, montés coulissant dans la rampe.

Les figures 10A, 10B, 10C et 10D illustrent quatre positions occupées par lesdits moyens de liaison lors du repliement du dispositif à l'intérieur de l'avion.

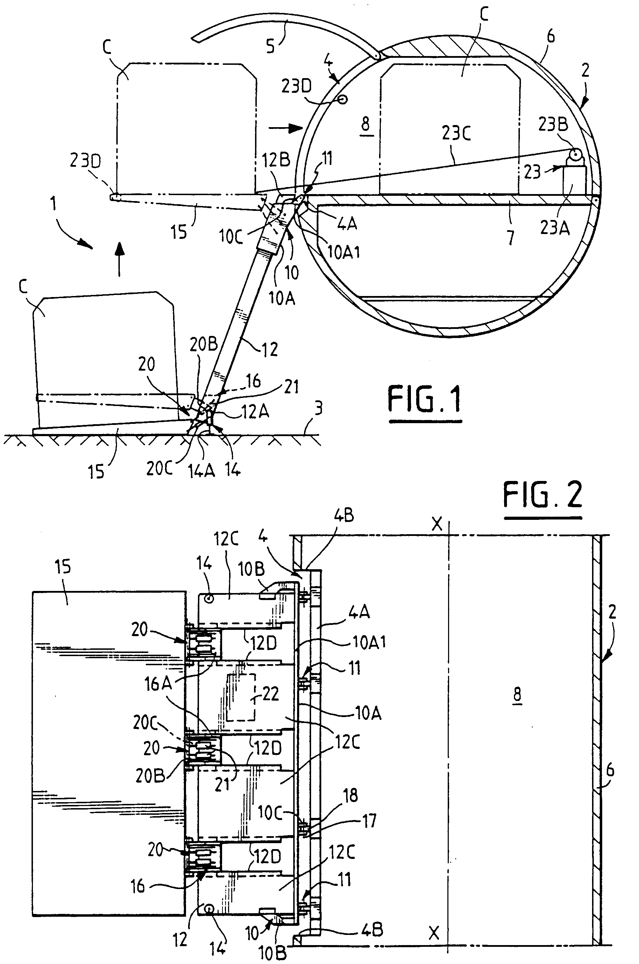

Le dispositif élévateur 1 selon l'invention, montré schématiquement sur les figures 1 à 3, est destiné à permettre le chargement ou le déchargement de charges à bord d'un avion 2. Dans cet exemple, le chargement des charges (ou leur déchargement), par exemple des matériels logés initialement et le plus souvent dans des conteneurs standardisés C situés au niveau du sol 3, s'effectue par l'ouverture 4 d'une porte latérale 5 prévue sur le fuselage 6 de l'avion 2 et donnant accès au niveau du plancher 7 de son pont 8.

Conformément à l'invention, le dispositif élévateur 1 comprend principalement une glissière 10 articulée, dans ce premier exemple de réalisation, à l'encadrement inférieur 4A délimitant l'ouverture 4 par l'intermédiaire de moyens de liaison amovibles 11, une rampe 12 montée à l'intérieur de la glissière 10 et reposant sur le sol 3 par l'intermédiaire d'organes d'appui 14, et une plate-forme 15, sur laquelle est disposé le conteneur C et qui peut coulisser le long de la rampe d'accès 12 par l'intermédiaire de moyens d'entraînement 16 à chariots 16A, pour amener dans ce cas le conteneur C au niveau du plancher 7 du pont. Le dispositif élévateur 1 occupe bien évidemment, en regard des figures 1 à 3, sa position déployée, en étant fixé à l'encadrement inférieur 4A de ladite ouverture 4.

Plus particulièrement, la glissière 10 présente une section en forme de U, dont la base 10A est reliée, par son bord supérieur 10A1, à l'encadrement 4A grâce aux moyens de liaison 11. La rampe d'accès 12 est alors maintenue et guidée entre les deux parois latérales et opposées 10B de la glissière.

Comme le montre la figure 2, les moyens de liaison 11 du dispositif élévateur à l'avion 2 sont du type à articulation cylindrique définie, dans ce mode de réalisation schématiquement illustré, par quatre liaisons alignées axes 17 - crochets 18, sensiblement parallèlement à l'axe longitudinal de roulis X-X dudit avion. Ainsi, les quatre crochets 18 sont fixés, de façon espacée, le long de l'encadrement inférieur 4A du fuselage et sont susceptibles de recevoir respectivement les quatre axes 17 alignés les uns à la suite des autres et disposés sur la glissière en correspondance des crochets 18. Les axes 17 sont portés à leurs extrémités par des chapes 10C qui prolongent extérieurement le bord supérieur de la glissière 10. Ces axes 17 sont par exemple définis par des boulons qui s'engagent dans les crochets, tandis que les chapes 10C chevauchent respectivement de part et d'autre ces derniers.

On comprend donc que, par l'intermédiaire desdits moyens de liaison 11, la glissière 10, et donc le dispositif 1, peut aisément être soit verrouillée à l'encadrement inférieur 4A du fuselage de l'avion, soit déverrouillée et libérée de ce dernier. La glissière 10 peut bien entendu également pivoter par ses axes 17 autour des crochets 18 et être ramenée, avec la rampe et la plate-forme, à l'intérieur du fuselage 6 dudit avion, comme on le verra ultérieurement.

Dimensionnellement, la hauteur de la glissière 10 est nettement inférieure à celle de la rampe, et elle doit être déterminée pour, d'une part, guider et maintenir correctement la rampe et, d'autre part, minimiser son encombrement lorsqu'elle est rabattue à l'intérieur du fuselage 6 dudit avion.

Lorsque le dispositif élévateur 1 est en position déployée, l'extrémité supérieure 12B de la rampe d'accès 12, qui est alors inclinée, émerge légèrement de la glissière 10 pour se situer sensiblement au niveau du plancher 7 du pont 8, tandis que son extrémité inférieure ou base 12A s'applique sur le sol par l'intermédiaire des organes d'appui 14. Ces derniers sont constitués par des vérins hydrauliques 14A articulés par rapport à la rampe et, comme le montre plus particulièrement la figure 1, ils sont agencés avantageusement perpendiculairement au sol de façon à reprendre au mieux les efforts de levage et à corriger le déplacement relatif, qui apparaît entre la rampe et la glissière, à cause de l'affaissement des amortisseurs de l'avion durant les opérations de chargement.

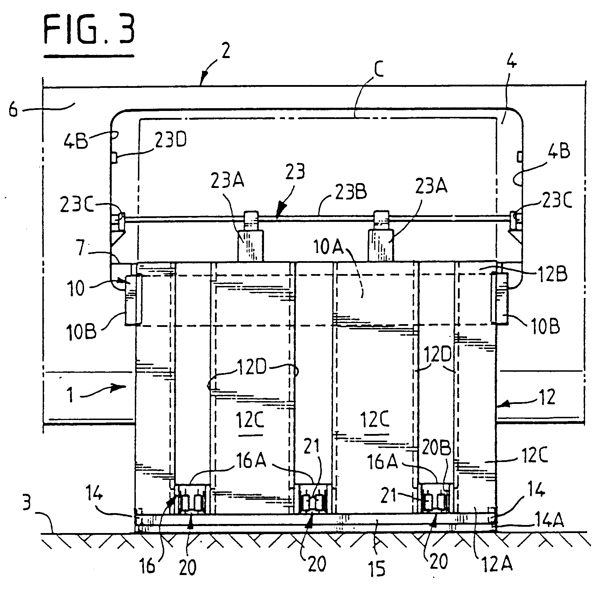

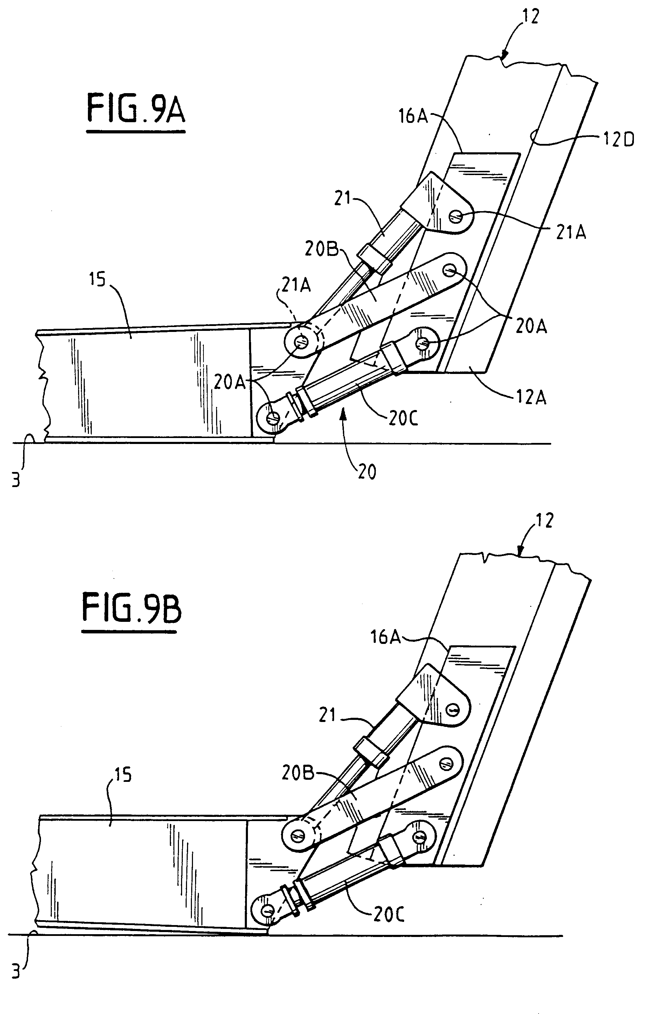

Par ailleurs, les moyens d'entraînement 16 de la plate-forme 15, par rapport à la rampe d'accès 12, sont réalisés par l'intermédiaire des chariots déplaçables 16A. En raison de la largeur d'accès de l'ouverture latérale, qui peut atteindre six mètres ou plus, la rampe 12 est constituée de plusieurs tronçons 12C, par exemple quatre, entre lesquels sont montés les chariots 16A alors au nombre de trois, qui peuvent bien entendu coulisser simultanément dans des guides latéraux 12D ménagés sur les tronçons de rampe. Ainsi, des conteneurs, même pondéreux, peuvent être élevés via la plate-forme, grâce à ces trois chariots déplaçables 16A espacés régulièrement les uns des autres. Alors que la liaison entre les chariots 16A et les tronçons de rampe 12C s'effectue au moyen des guides latéraux 12D, lesdits chariots sont associés à la plate-forme 15 par des mécanismes à parallélogramme déformable 20 et des vérins de levage 21 de la plate-forme par rapport à la rampe. Comme le montrent les figures 2 et 3 ainsi que notamment la figure 9A, deux mécanismes 20 et vérins 21 sont prévus, en parallèle, entre chaque chariot 16A et la plate-forme 15, de sorte que, dans ce mode de réalisation, six mécanismes 20 et vérins 21 identiques sont utilisés en étant alignés. Les quatre axes d'articulation 20A de chaque mécanisme à parallélogramme déformable 20 sont parallèles à la liaison axes-crochets de la glissière 10 à l'encadrement inférieur 4A, et donc perpendiculaires à la direction de déplacement des chariots le long de la rampe, de même que les axes d'articulation 21A de chaque vérin de levage 21.

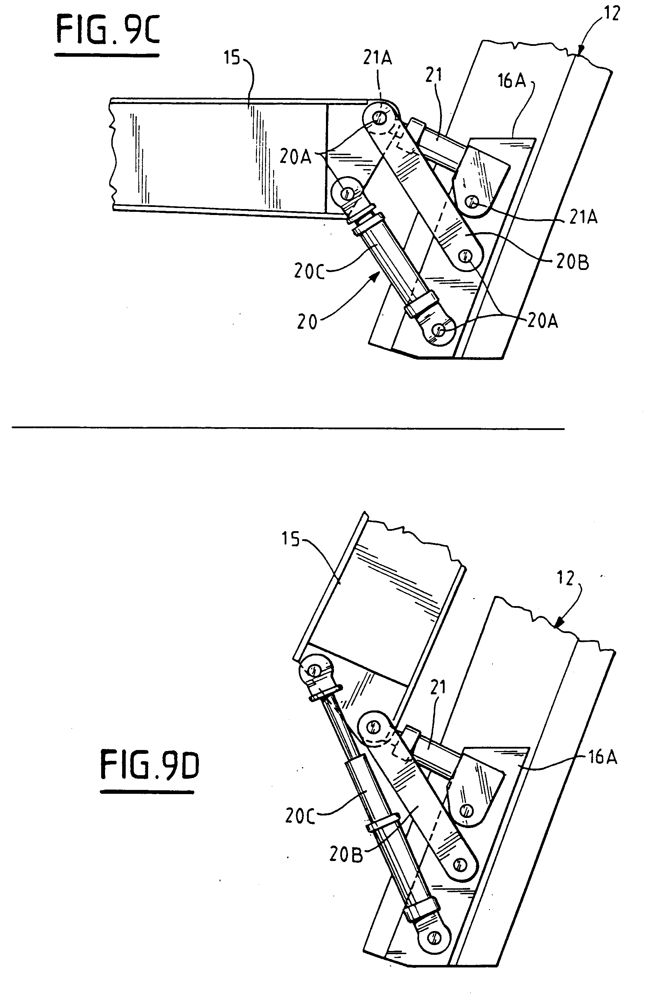

Plus particulièrement, comme le montrent les figures 9A à 9D, chaque mécanisme 20 est formé d'un élément rigide 20B, correspondant au bras supérieur de longueur fixe du parallélogramme et dont les extrémités sont reliées par les axes 20A respectivement au chariot 16A et à la plate-forme 15, et d'un vérin hydraulique 20C, correspondant au bras inférieur alors de longueur variable du parallélogramme et dont les extrémités sont également reliées par les axes 20A respectivement au chariot et à la plate-forme. Chaque vérin de levage 21 est, quant à lui, relié respectivement au chariot 16A et à la plate-forme 15 par les axes 21A parallèles aux axes 20A. Ainsi, grâce à ces mécanismes 20 et à ces vérins de levage 21, la plate-forme 15 peut pivoter par rapport aux chariots 16A et, donc, à la rampe 12, en fonction de l'extension ou de la rétraction simultanée des vérins 20C ou 21, et on voit, sur les figures 9A à 9D, que la plate-forme 15 peut :
- s'adapter aisément au relief du sol 3, quel qu'il soit (figure 9A) ;
- occuper une position horizontale idéale en vue du levage ou de l'abaissement des conteneurs (action des vérins 20C, figure 9B) ;
- occuper une position horizontale levée (action des vérins 21, figure 9C) ;
- occuper une position rabattue contre la rampe, lorsque le dispositif est replié (action des vérins 20C, figure 9D) ; et
- rattraper également la position encastrée variable desdits chariots 16A dans la rampe.

Bien évidemment, les chariots déplaçables 16A, les vérins d'appui 14A, les vérins 20C des mécanismes 20 et les vérins de levage 21 sont commandés par une source d'alimentation 22, à laquelle ils sont reliés et qui peut être, à titre d'exemple, une batterie de microcentrales hydrauliques intégrées dans la structure de la rampe 12 et symboliquement représentées par un rectangle 22 sur la figure 2. Ces batteries peuvent être alors alimentées en énergie électrique soit par l'un des systèmes de puissance de l'avion, soit par un banc de puissance au sol.

Par ailleurs, un mécanisme moteur 23 est prévu sur le pont 8 du fuselage 6 dudit avion cargo 1. Ce mécanisme moteur 23 a pour but d'une part, de transférer les conteneurs C de la plate-forme 15, en position haute, vers le plancher 7 du pont 8 et réciproquement, et d'autre part, d'assurer la rentrée du dispositif de levage 1 dans le pont 8 de l'avion ou inversement, comme on le verra ultérieurement. Pour cela, le mécanisme moteur 23 comprend, dans ce mode de réalisation, deux treuils électriques 23 fixés au plancher 7 du pont 8 et du côté opposé à l'encadrement inférieur 4A de l'ouverture 4, par rapport à l'axe longitudinal X-X de l'avion. Ces deux treuils 23A, alignés parallèlement à cet axe, supportent un arbre de transmission 23B autour des extrémités duquel sont enroulés des câbles 23C. Ceux-ci sont alors susceptibles d'être accrochés soit au conteneur C à transférer, soit à la rampe 12 du dispositif 1.

Le dispositif de levage 1 présente ainsi la particularité et l'avantage de pouvoir, par l'intermédiaire des moyens de liaison amovibles notamment, être intégré à l'avion ou être rapporté temporairement à celui-ci pour procéder au chargement ou au déchargement des conteneurs.

Le fonctionnement du dispositif de levage décrit ci-après mettra en relief cette caractéristique.

Tout d'abord, on suppose que le dispositif de levage 1 se trouve initialement dans la position déployée qu'il occupe en regard des figures 1 à 3. Ainsi, les moyens de liaison 11 verrouillent la glissière 10 sur l'encadrement inférieur 4A de l'ouverture 4, correspondant au seuil de porte, celle-ci étant en position ouverte. La plate-forme 15 est alors, par l'intermédiaire des chariots 16A, en position basse reposant sur le sol 3, grâce aux mécanismes 20, tandis que la rampe inclinée 12 prend appui sur le sol par les vérins 14A immobilisant le dispositif 1.

Lorsque le conteneur C est disposé sur la plate-forme 15, celle-ci est amenée en position horizontale, par l'intermédiaire des vérins 20C des mécanismes à parallélogramme déformable 20, illustrée en position basse en traits mixtes. Les vérins 20C sont alors verrouillés en position. Puis, les vérins de levage 21 sont actionnés pour amener la plate-forme en position horizontale levée (figure 9C).

A ce moment, les chariots 16A sont commandés par la source d'alimentation 22 et se déplacent le long des guides latéraux 12D des tronçons de rampe 12C, à la manière d'un funiculaire. Lorsque la plate-forme 15 arrive en position haute (représentée en traits mixte sur la figure 1), elle se trouve sensiblement au même niveau que le plancher 7 du pont. Le transfert du conteneur C, de la plate-forme 15 vers le plancher 7, peut commencer en accrochant pour cela les câbles 23C à des points d'ancrage non illustrés prévus sur le conteneur, et en actionnant les treuils 23A. le conteneur C est ainsi tiré à bord de l'avion pour être ensuite déplacé sur le plancher 7 le long de l'axe X-X de façon à libérer l'emplacement de transfert pour les conteneurs suivants.

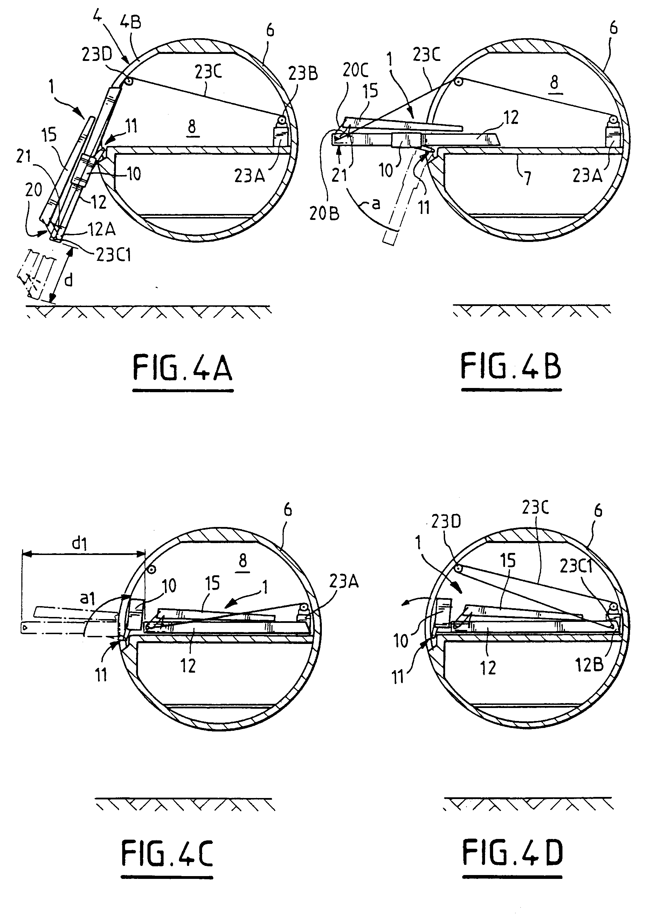

Le dispositif 1 a rempli sa fonction de levage et on décrira ci-après sa rentrée à l'intérieur du pont 8, en regard des figures 4A à 4D.

Pour cela, la plate-forme 15, alors en position basse mais rehaussée par rapport à la rampe 12, est repliée contre celle-ci en pivotant autour des axes 20A des mécanismes 20 par les vérins 20C. Puis, les deux câbles 23C, qui sont issus de l'arbre 23B des treuils, sont agencés pour s'enrouler respectivement autour des poulies 23D prévues sur les encadrements latéraux 4B de ladite ouverture 4. Les deux câbles 23C sont ensuite accrochés par leurs extrémités libres 23C1 respectivement de part et d'autre de la rampe, à sa partie inférieure ou base 12A. La glissière 10, associée par les moyens de liaison amovibles 11 à l'encadrement inférieur 4A de l'ouverture, est verrouillée en rotation, et la rampe 12 est alors hissée par les câbles 23C des treuils 23A, jusqu'à ce que la glissière soit relativement située entre les extrémités supérieure 12B et inférieure 12A de la rampe 12. la figure 4A montre cet instant où la rampe s'est déplacée, par rapport à la glissière fixe 10, d'une distance d. Par exemple, deux butées escamotables non représentées et situées sur les flancs latéraux de la rampe assurent l'arrêt du mouvement du hissage de la rampe jusqu'à cette position médiane.

Puis, les moyens de liaison 11 sont manoeuvrés de façon que les axes 17 soient déverrouillés des crochets 18, c'est-à-dire libres en rotation dans ceux-ci, de sorte que la glissière peut pivoter autour des axes d'articulation 17 tout en restant engagée dans les crochets 18. L'effort de traction des câbles 23C tirés par les treuils provoque alors la rotation de la glissière 10 autour des axes 17 et, donc, de l'ensemble constitué de la glissière 10, de la rampe 12 et de la plate-forme 15, jusqu'à une position horizontale où la glissière est à nouveau verrouillée. La figure 4B illustre à cet instant le dispositif 1 ayant basculé d'un angle a.

Ensuite, les butées précitées de la rampe 12 sont effacées de sorte que les câbles 23C tirés par les treuils 23A entraînent la rampe 12 à l'intérieur de l'avion, sur le plancher 7 du pont 8, à travers la glissière 10. Les extrémités 23C1 des câbles de traction sont retirées de la rampe 12 pour permettre ensuite le pivotement angulaire de la glissière 10, de nouveau libre en rotation, vers l'intérieur du fuselage. La figure 4C montre les déplacements linéaire d1 de l'ensemble rampe-plate-forme par rapport à la glissière, puis angulaire a1 de la glissière. A ce moment, la porte latérale 5 de l'avion est fermée puis verrouillée, le dispositif de levage 1 étant logé, en position repliée, dans le pont du fuselage.

Le passage de la position repliée du dispositif de levage 1 à sa position déployée s'effectue selon des séquences de fonctionnement inverses à celles décrites ci-dessus, en fixant alors les extrémités libres 23C1 des câbles à l'extrémité supérieure 12B de la rampe 12, respectivement de part et d'autre, comme le montre schématiquement la figure 4D.

Lorsque le dispositif de levage 1 occupe sa position déployée, telle que représentée sur la figure 1, les conteneurs C sont amenés successivement devant l'ouverture 4 pour être transférés du plancher 7 du pont vers la plate-forme 15 du dispositif 1, par l'intermédiaire des câbles 23C s'enroulant autour des poulies 23D alors installées momentanément, par exemple, à l'extrémité gauche de la plate-forme 15 (figure 1) ou autour d'autres poulies prévues à cet effet. Puis, les conteneurs sont par la suite descendus, via la rampe 12, jusqu'au sol 3 pour être déchargés.

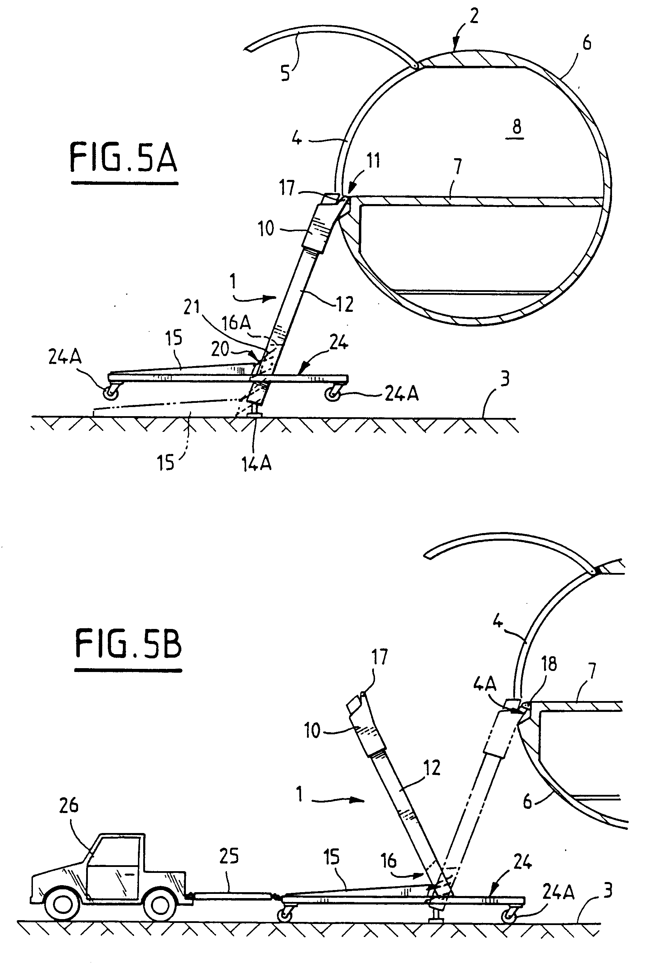

Le dispositif de levage 1 selon l'invention peut être également séparé de l'avion 2 auquel il est fixé lors du chargement ou du déchargement des conteneurs C. Pour cela, comme le montre la figure 5A représentant le dispositif en position déployée, la plate-forme 15 est élevée par rapport au sol 3, par le déplacement des chariots 16A, d'une distance suffisante pour permettre le montage de roues 24A, sous la plate-forme 15, en utilisant alors des poutres 24.

A ce stade, la glissière 10 est rendue solidaire de la rampe 12 par tout moyen mécanique approprié non représenté, puis les moyens de liaison 11 sont effacés en désolidarisant alors les axes 17 des crochets 18. Par l'intermédiaire des chariots 16A, la plate-forme 15 est abaissée jusqu'à ce que les roues 24A viennent au contact du sol 3 et que les axes 17 de la glissière se dégagent desdits crochets. Les vérins d'appui 14 au sol de la rampe sont rétractés.

Ensuite, comme le montre la figure 5B, la rampe 12 est basculée, par l'intermédiaire des mécanismes 20, pour se rabattre contre la plate-forme 15. A ce moment, le dispositif de levage 1 occupe sa position repliée. Une barre de remorquage 25 associe les poutres 24, sur lesquelles est disposé le dispositif replié, à un véhicule 26 pour l'amener, par exemple, à un hangar de stockage ou à un autre avion cargo à charger ou à décharger. Dans ce dernier cas, la manoeuvre d'arrimage du dispositif 1 contre l'encadrement inférieur de l'ouverture latérale se déroule selon les séquences inverses à celles décrites ci-dessus pour la séparation du dispositif dudit avion.

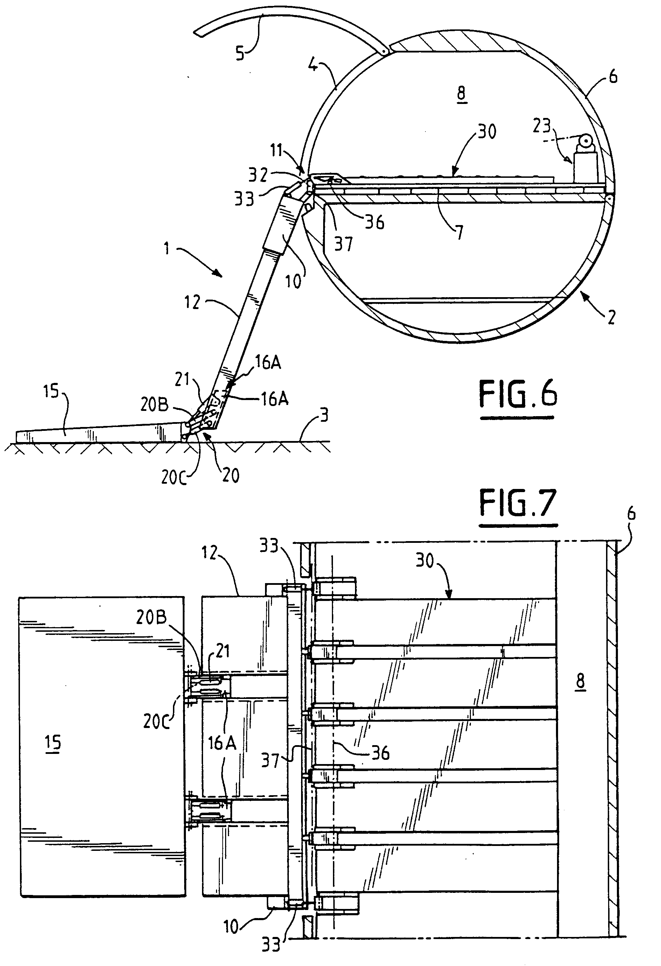

Dans un second exemple préféré de réalisation, illustré notamment en regard des figures 6, 7 et 8, le dispositif élévateur 1 est associé, de façon amovible, à un faux plancher rigide 30 rapporté sur le plancher d'origine 7 du pont 8 dudit aéronef et situé en face de l'ouverture 4 de la porte 5. Ce faux plancher rigide 30 est fixé, par des éléments de fixation 31, aux rails de structure 7A du plancher 7, servant initialement à l'installation de sièges-passagers, de sorte que ce faux plancher 30 se présente ainsi comme une surépaisseur rendant sa mise en place aisée.

On comprend donc que le faux plancher rigide, qui est disposé entre la glissière du dispositif 1 et le plancher d'origine de l'avion, et dont la conception, à partir d'un plateau 30A et de ferrures 30B, offre une résistance mécanique supérieure à celle du plancher 7, n'implique pas de déformation sur la structure de l'avion, même lors du levage de charges importantes.

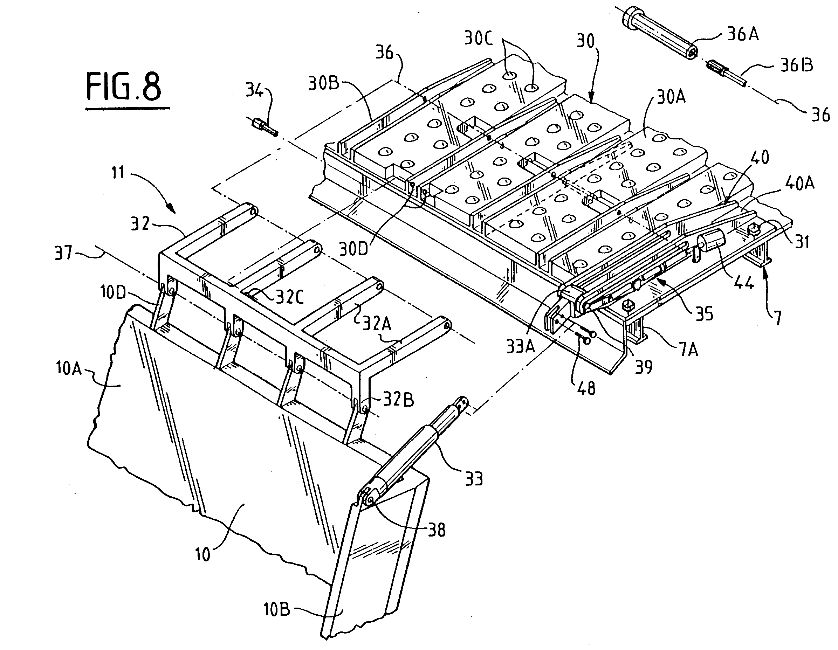

Avantageusement, on remarque sur la figure 8, que des billes ou analogues 30C sont logées dans le plateau 30A du faux plancher, en faisant légèrement saillie par rapport à celui-ci, de façon à réduire le frottement des conteneurs C, lors de leur transfert du dispositif vers l'intérieur de l'avion et réciproquement, et à faciliter ainsi leur déplacement.

Les moyens de liaison 11 sont alors, dans cet exemple préféré de réalisation, d'une conception totalement différente de ceux décrits dans le premier exemple de réalisation. En effet, comme le montre notamment la figure 8, les moyens de liaison 11 comprennent principalement une pièce intermédiaire 32, des bielles élastiques 33, des broches de verrouillage 34 et des mécanismes de verrouillage 35 de ladite glissière.

Plus particulièrement, la glissière 10, dont la réalisation correspond sensiblement à celle précédemment décrite, est reliée au faux plancher rigide par la pièce 32 qui, en raison du décalage de niveau entre le faux plancher et la glissière, présente transversalement une forme en équerre tandis que, longitudinalement, elle s'étend sur une longueur correspondant à celle de l'ouverture 4 de la porte. D'un côté, la pièce intermédiaire comprend des crosses parallèles 32A qui s'engagent dans les ferrures 30B du faux plancher en y étant liées par un premier axe 36 et, de l'autre côté, elle se termine par des chapes 32B dans lesquelles s'engagent des pattes 10D de la glissière 10, en y étant liées autour d'un second axe 37 parallèle au premier 36 et à la base 10A de la glissière. Cette pièce intermédiaire 32 constitue, comme on le verra ultérieurement, un renvoi d'articulation pour la glissière 10 par rapport au faux plancher rigide 30.

Aussi, pour immobiliser en rotation la pièce intermédiaire 32 autour du premier axe 36, on utilise les broches de verrouillage 34 du type à billes, dont une est représentée sur la figure 8. Chaque broche traverse des trous de passage alignés 30D et 32C ménagés en correspondance dans l'ensemble assemblé ferrure 30B - crosse 32A, de sorte que, une fois engagée, la pièce intermédiaire 32 est solidaire du faux plancher 30. Les broches sont engagées parallèlement aux premier et second axes 36,37.

De plus, les moyens de liaison 11 comprennent dans ce cas deux bielles élastiques identiques 33 respectivement disposées de part et d'autre de la glissière 10, sur ses parois latérales 10B, pour l'entraîner à l'intérieur de l'avion et réciproquement, lors de son pivotement autour du second axe 37. Pour cela, chaque bielle 33 est liée à la glissière autour d'un axe 38 et à son mécanisme de verrouillage 35 autour d'un axe 39, lesdits axes 38 et 39 étant parallèles aux premier et second axes 36,37. Bien évidemment, les deux mécanismes de verrouillage 35, auxquels sont respectivement associées les bielles élastiques, sont identiques et sont fixés au faux plancher rigide. On voit notamment sur les figures 8 et 10A, que chacun desdits mécanismes 35 se compose d'une semelle 40 en forme de U pouvant être une ferrure d'extrémité du faux plancher, et de systèmes 41 à cliquets articulés 42 et 43. Plus particulièrement, la base 40A de chaque semelle est fixée au faux plancher rigide 30, et ses flancs latéraux opposés 40B sont pourvus de lumières oblongues longitudinales 40C dans lesquelles est engagé, de façon coulissante, l'axe 39 portant l'extrémité correspondante ou tête 33A de la bielle élastique 33. Par ailleurs, les extrémités libres des cliquets articulés, opposées à celles associées entre elles, sont conformées en butée 42A et 43A qui sont destinées, lorsque le système est opérationnel comme on le verra ultérieurement, à immobiliser en position l'axe 39 de la bielle respectivement contre les fonds arrondis 40D et 40E des lumières 40C. Avantageusement, les deux systèmes 41 à cliquets, prévus sur les semelles 40, sont commandés par un actionneur commun 44, hydraulique par exemple, fixé à l'une des semelles et relié à deux jeux de deux biellettes articulées 45, qui servent à maintenir dans la position choisie les systèmes à cliquets, par l'intermédiaire du premier axe 36. Ce dernier est constitué matériellement d'axes creux 36A et de demi-arbres cannelés 36B, comme l'illustre la figure 8, et il associe l'un à l'autre les deux jeux 45 de biellettes liés aux semelles 40. Le premier axe 36 possède ainsi deux fonctions, une première fonction d'articulation démontable de la pièce 32 par rapport au faux plancher, et une seconde fonction de transmission pour synchroniser les mécanismes de verrouillage 35.

Le fonctionnement du dispositif élévateur 1 lié au faux plancher rigide 30 par les moyens de liaison 11 est décrit ci-après, notamment en regard des figures 10A à 10D.

Dans la première position illustrée sur la figure 10A, pour laquelle le dispositif est en phase d'utilisation, reposant sur le sol par les vérins d'appui 14, la pièce 32 formant renvoi d'articulation est verrouillée sur le plateau 30A par les broches 34. Les axes 39 des têtes de bielles sont situés vers les fonds arrondis 40D des lumières oblongues en étant libres de coulisser par rapport à celles-ci, c'est-à-dire que les mécanismes de verrouillage 35 sont effacés. De la sorte, cette liberté de déplacement des têtes de bielles autorise les mouvements relatifs de la rampe 12 par rapport à l'avion, qui apparaissent lors du transfert des conteneurs depuis le sol vers le plateau 30A à billes du faux plancher de l'avion, ou réciproquement. Comme le montre la figure 7, la rampe 12 se compose par exemple de trois tronçons entre lesquels sont alors prévus deux chariots déplaçables 16A équipés, comme précédemment, des mécanismes 20 et des vérins 21 pour commander la plate-forme 15. Les opérations de levage de la plate-forme 15 s'effectuent de façon analogue que précédemment, via les mécanismes 20 et les vérins de levage 21 d'une part, et les chariots déplaçables 16A d'autre part.

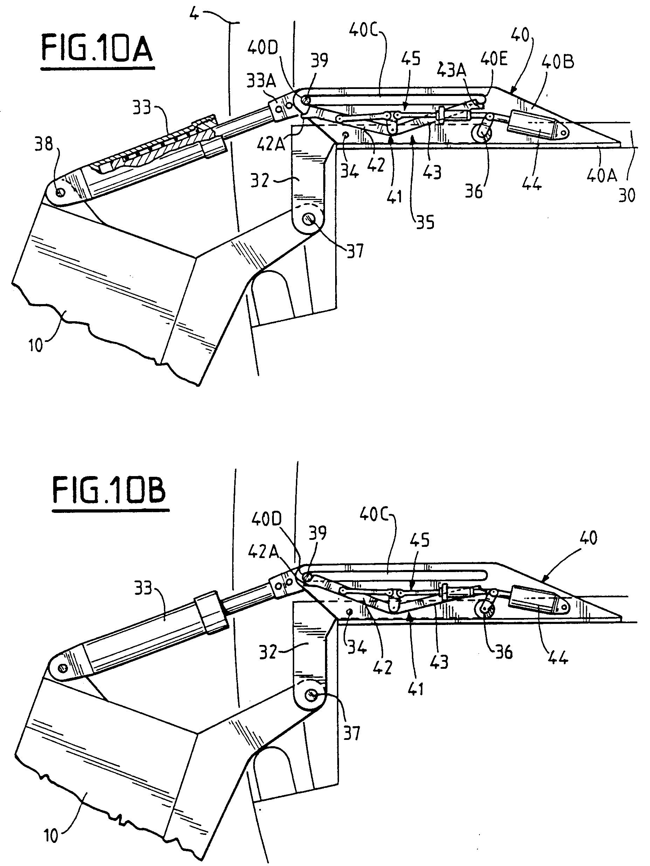

Dans la deuxième position illustrée sur la figure 10B, le dispositif 1 se trouve au début de la phase de repliement de la rampe ou alors à la fin de la phase de déploiement. Pour cela, la pièce 32 est toujours verrouillée sur le plateau 30A par les broches 34, tandis que les vérins 14 d'appui au sol sont rétractés. La glissière, portant la rampe, tire sur les bielles élastiques 33 dont les axes 39 s'appliquent contre les fonds arrondis 40D des lumières. A ce moment, l'actionneur 44 est manoeuvré de sorte que, par l'intermédiaire du premier axe commun d'entraînement ou de conjugaison 36 et des jeux de biellettes 45, les butées d'extrémité 42A des systèmes à cliquets 41 bloquent les axes 39 des bielles contre les fonds arrondis, ce qui empêche tout déplacement de ceux-ci le long des lumières et, donc, la rotation de la glissière 10 autour du second axe 37, pendant le hissage de la rampe 12 par l'intermédiaire des câbles 23C, comme dans la réalisation précédente (figure 4A).

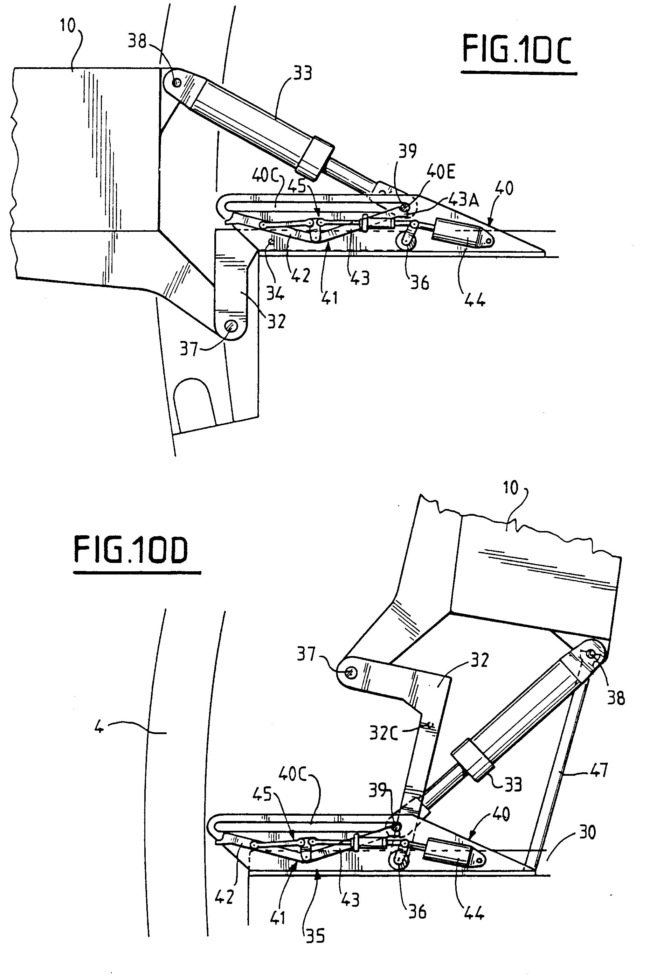

Dans la troisième position illustrée sur la figure 10C, le dispositif est en phase de repliement ou de déploiement, c'est-à-dire que la glissière 10 et la rampe 12 ont pivoté jusqu'à la position horizontale, comme sur la figure précédente 4B. Dans cette position, la pièce 32 est toujours maintenue verrouillée sur le plateau 30A à billes. Les systèmes à cliquets ont été préalablement effacés des axes 39 pour permettre le coulissement de ces derniers dans les lumières oblongues 40C jusqu'aux fonds arrondis opposés 40E, lors de sa rotation autour du second axe 37, au moyen des câbles. La glissière 10 est alors maintenue dans la position horizontale illustrée sur la figure 10C par les bielles élastiques 33, dont les axes 39 sont verrouillés contre les fonds 40E des lumières grâce aux butées d'extrémité 43A des systèmes à cliquets, lesquels ont été manoeuvrés simultanément par l'actionneur 44, via le premier axe 36 et les deux jeux 45 de biellettes. A ce moment, le transfert de la rampe 12 à l'intérieur du fuselage sur le faux plancher rigide 30 peut commencer de la façon analogue à celle décrite en regard de la figure 4C.

Dans la quatrième position illustrée sur la figure 10D, le dispositif 1 se trouve en fin de la phase de repliement ou au début de la phase de déploiement, c'est-à-dire que la glissière 10 est repliée à l'intérieur du fuselage. Pour cela, les broches à billes 34 sont retirées, de sorte que la pièce 32 formant renvoi d'articulation est déverrouillée. A ce moment, l'ensemble pièce 32 - glissière 10 peut pivoter autour du premier axe 36 sous l'action du treuil et des câbles jusqu'à la position illustrée, laquelle est rendue stable par l'utilisation d'un tirant 47 placé entre la glissière et les mécanismes de verrouillage 35.

Quant à la séparation du dispositif élévateur 1 de l'avion, elle s'effectue au niveau des liaisons entre le plateau 30A à billes du faux plancher et la pièce intermédiaire 32. Pour cela, on retire les broches de verrouillage 34 et le premier axe d'articulation 36. Puis, on procède au désaccouplement des bielles élastiques 33 pour séparer les têtes 33A du reste des bielles en retirant également deux broches à billes 48, comme le montre la figure 8.

De ce qui précède, il ressort que le dispositif de levage 1 de l'invention autorise une autonomie totale, d'une part, de chargement ou de déchargement des conteneurs vis-à-vis de l'avion et, d'autre part, d'embarquement ou de débarquement de l'avion. En outre, les modifications nécessaires à son installation sont minimes puisqu'elles consistent principalement, à prévoir soit des crochets à l'encadrement inférieur de l'ouverture latérale, soit un faux plancher rigide sur celui d'origine, ainsi que des treuils, ce qui permet d'équiper aisément et à moindre frais une flotte d'avions. Par ailleurs, les efforts de levage des conteneurs sont transmis en majeure partie au sol, et non à la structure de l'avion, et sa stabilité, lorsqu'il est en position déployée et en appui par les vérins contre le sol, lui permet une utilisation sur des terrains non préparés et sous des conditions météorologiques (vents) même difficiles.

## Revendications

1. Dispositif élévateur pour charger et décharger des charges par l'ouverture d'une porte d'un aéronef, relié à la structure dudit aéronef, à proximité de ladite ouverture (4), et comportant :
- une rampe (12) susceptible de reposer, de façon inclinée, sur le sol par l'intermédiaire d'organes d'appui (14) ;
- une plate-forme de support (15) reliée de façon coulissante à ladite rampe, et recevant lesdites charges ; et
- des moyens d'entraînement (16) de ladite plate-forme par rapport à la rampe,
caractérisé en ce qu'il comprend une glissière (10) qui est susceptible d'être associée à ladite structure par des moyens de liaisons amovibles (11) et dans laquelle est guidée ladite rampe (12).

2. Dispositif selon la revendication 1,
caractérisé en ce qu'il est lié à l'encadrement inférieur (4A) délimitant ladite ouverture (4).

3. Dispositif selon la revendication 2,
caractérisé en ce que lesdits moyens de liaison amovibles (11) de ladite glissière audit encadrement inférieur sont définis par des articulations cylindriques axes-crochets de verrouillage, lesdits axes (17) étant alignés et portés par ladite glissière (10), tandis que lesdits crochets de verrouillage (18) sont fixés audit encadrement inférieur (4A).

4. Dispositif selon la revendication 1,
caractérisé en ce qu'il est lié à un faux plancher rigide (30), rapporté sur le plancher d'origine dudit aéronef et situé en face de ladite ouverture (4).

5. Dispositif selon la revendication 4,
caractérisé en ce que lesdits moyens de liaison (11) comprennent :
- une pièce (32) qui forme un renvoi d'articulation et à laquelle sont reliés, autour d'un premier (36) et d'un second (37) axes parallèles respectifs, ledit faux plancher et ladite glissière ;
- des broches (34) susceptibles d'immobiliser en rotation, autour dudit premier axe, ladite pièce sur ledit faux plancher ;
- deux bielles élastiques (33) prévues respectivement de part et d'autre de ladite glissière ; et
- des mécanismes de verrouillage (35) de ladite glissière, fixés audit faux plancher (30) et coopérant avec lesdites bielles élastiques (33), dont les extrémités sont respectivement reliées auxdits mécanismes correspondants et à ladite glissière autour d'axes (38,39), parallèles auxdits premier et second axes.

6. Dispositif selon la revendication 5,
caractérisé en ce que lesdits mécanismes de verrouillage (35) sont identiques et en ce que chacun d'eux se compose d'une semelle (40) en forme de U, dont la base (40A) est fixée audit faux plancher et dont les flancs latéraux (40B) sont pourvus de lumières oblongues (40C) dans lesquelles peut coulisser l'axe de ladite bielle (33), et de systèmes (41) à cliquets articulés (42,43), commandables par un actionneur (44) et susceptibles de verrouiller en position ledit axe de la bielle contre l'un ou l'autre des fonds arrondis (40D,40E) desdites lumières.

7. Dispositif selon l'une des revendications 5 ou 6,
caractérisé en ce que les mécanismes de verrouillage (35), associés auxdites bielles, sont commandés par un même actionneur (44), un arbre de conjugaison coaxial audit premier axe (36), traversant ledit faux plancher, pour relier les mécanismes de verrouillage (35).

8. Dispositif selon l'une quelconque des revendications précédentes 1 à 7,
caractérisé en ce que ladite glissière (10) présente une section transversale en forme de U, dont la base (10A) est destinée à coopérer avec ladite structure par l'intermédiaire des moyens de liaison (11), et entre les parois latérales (10B) de laquelle est guidée et maintenue ladite rampe (12).

9. Dispositif selon l'une quelconque des revendications précédentes 1 à 8,
caractérisé en ce que lesdits organes d'appui (14) sont définis par des vérins (14A) prévus à la base (12A) de ladite rampe et susceptibles de s'appliquer contre le sol (3).

10. Dispositif selon l'une quelconque des revendications précédentes 1 à 9,
caractérisé en que lesdits moyens d'entraînement (16) de ladite plate-forme (15) par rapport à la rampe (12) comprennent au moins un chariot déplaçable (16A), susceptible de coulisser le long de guides latéraux (12D) prévus sur ladite rampe pour amener ladite plate-forme de sa position basse à sa position haute, et inversement.

11. Dispositif selon la revendication 10,
caractérisé en ce que ladite plate-forme (15) est reliée audit chariot déplaçable (16A) par l'intermédiaire d'au moins un mécanisme à parallélogramme déformable (20), dont les quatre axes (20A) de pivotement, opposés deux à deux, sont parallèles à la liaison de ladite glissière (10) à la structure dudit aéronef et perpendiculaires à la direction de déplacement dudit chariot le long de la rampe, et d'au moins un vérin (21) ou analogue, reliant ledit chariot à ladite plate-forme et permettant de lever ou d'abaisser ladite plate-forme par rapport à la rampe, grâce au mécanisme à parallélogramme déformable.

12. Dispositif selon la revendication 11,
caractérisé en ce que ledit mécanisme à parallélogramme déformable (20) est constitué, pour son bras supérieur, par un élément rigide (20B) dont les extrémités sont liées, autour des axes correspondants (20A), à ladite plate-forme (15) et audit chariot (16A), et pour son bras inférieur, par un vérin ou analogue (20C) articulé à ses extrémités, autour des deux autres axes (20A), à ladite plate-forme et audit chariot, et susceptible de rabattre ladite plate-forme contre la rampe, ou inversement, lorsqu'il est actionné.

13. Dispositif selon l'une quelconque des revendications précédentes 1 à 12,
caractérisé en ce qu'un mécanisme moteur (23) est prévu à l'intérieur dudit aéronef pour, d'une part, transférer lesdites charges (C) de ladite plate-forme (15) en position haute à l'intérieur dudit aéronef et inversement, et d'autre part, assurer la rentrée ou la sortie de l'ensemble constitué de la rampe (12), de la glissière (10) et de la plate-forme (15) dans ou hors dudit aéronef (2).

14. Dispositif selon la revendication 13,
caractérisé en ce que ledit mécanisme moteur (23) comprend au moins un treuil (23A) fixé à l'intérieur dudit aéronef, du côté opposé à ladite ouverture, et équipé de câbles (23C) qui s'enroulent autour de poulies respectives (23D) pour se fixer respectivement de part et d'autre de la base de ladite rampe (12) lors de son hissage à l'intérieur dudit aéronef, ou auxdites charges (C) à transférer.

15. Dispositif selon les revendications 9, 10, 11 et 12,
caractérisé en ce que lesdits organes d'appui (14), lesdits moyens d'entraînement (16) et lesdits vérins (20C,21) des mécanismes à parallélogramme déformable sont commandés par une source de puissance hydraulique (22) prévue sur ladite rampe.

16. Dispositif selon l'une quelconque des revendications précédentes 1 à 15,
caractérisé en ce que des organes de roulement (24A) sont associés à ladite plate-forme.

## Claims

1. Lifting device for loading and unloading unit loads via the opening of a door on an aircraft, connected to the structure of the said aircraft in the proximity of the said opening (4), and including:
- a ramp (12) capable of resting, in an inclined manner, on the ground via bearing members (14);
- a support platform (15) slidably connected to the said ramp and receiving the said unit loads; and
- means (16) for driving the said platform with respect to the ramp,
characterized in that it comprises a slideway (10) which is capable of being connected up to the said structure by removable linkage means (11) and in which slideway the said ramp (12) is guided.

2. Device according to Claim 1,
characterized in that it is linked to the lower frame (4A) delimiting the said opening (4).

3. Device according to Claim 2,
characterized in that the said removable means (11) for linking the said slideway to the said lower frame are defined by cylindrical articulations composed of pins and locking hooks, the said pins (17) being aligned and carried by the said slideway (10) while the said locking hooks (18) are fixed to the said lower frame (4A).

4. Device according to Claim 1,
characterized in that it is linked to a rigid false floor (30) which is attached to the original floor of the said aircraft and lies facing the said opening (4).

5. Device according to Claim 4,
characterized in that the said linkage means (11) comprise:
- a piece (32) which forms a cranked articulation assembly, to which piece are connected, respectively about a first axis (36) and a second axis (37), these axes being parallel, the said false floor and the said slideway;
- pins (34) capable of preventing the said piece on the said false floor from rotating about the said first axis;
- two elastic connecting rods (33) provided respectively on either side of the said slideway; and
- mechanisms (35) for locking the said slideway, these mechanisms being fixed to the said false floor (30) and interacting with the said elastic connecting rods (33), the ends of which are respectively connected to the said corresponding mechanisms and to the said slideway about pins (38, 39) which are parallel to the said first and second axes.

6. Device according to Claim 5,
characterized in that the said locking mechanisms (35) are identical and in that each of them is composed of a U-shaped support plate (40), the base (40A) of which is fixed to the said false floor and the side walls (40B) of which are provided with oblong slots (40C), in which the pin of the said connecting rod (33) can slide, and with systems (41) having articulated latch arms (42, 43), these being able to be controlled by an actuator (44) and capable of locking the said pin of the connecting rod in position against one or other of the rounded ends (40D, 40E) of the said slots.

7. Device according to either of Claims 5 and 6,
characterized in that the locking mechanisms (35) associated with the said connecting rods are controlled by one and the same actuator (44), a coupling shaft coaxial with the said first axis (36) passing through the said false floor in order to connect the locking mechanisms (35).

8. Device according to any one of the preceding Claims 1 to 7,
characterized in that the said slideway (10) has a U-shaped cross-section, the base (10A) of which is intended to interact with the said structure via the linkage means (11), and between the side walls (10B) of which slideway the said ramp (12) is guided and held in place.

9. Device according to any one of the preceding Claims 1 to 8,
characterized in that the said bearing members (14) are defined by cylinders (14A) provided at the base (12A) of the said ramp and capable of being applied against the ground (3).

10. Device according to any one of the preceding Claims 1 to 9,
characterized in that the said means (16) for driving the said platform (15) with respect to the ramp (12) comprise at least one movable carriage (16A), which is capable of sliding along lateral guides (12D) provided on the said ramp, in order to bring the said platform from its low position to its high position, and vice versa.

11. Device according to Claim 10,
characterized in that the said platform (15) is connected to the said movable carriage (16A) via at least one deformable-parallelogram mechanism (20), the four pivot pins (20A) of which, which are opposed in pairs, are parallel to the linkage of the said slideway (10) to the structure of the said aircraft and are perpendicular to the direction of movement of the said carriage along the ramp, and via at least one cylinder (21) or the like, connecting the said carriage to the said platform and enabling the said platform to be raised or lowered with respect to the ramp, by means of the deformable-parallelogram mechanism.

12. Device according to Claim 11,
characterized in that the said deformable-parallelogram mechanism (20) consists, in the case of its upper arm, of a rigid element (20B), the ends of which are linked about the corresponding pins (20A) to the said platform (15) and to the said carriage (16A), and in the case of its lower arm, of a cylinder (20C) or the like which is articulated at its ends, about the two other pins (20A), to the said platform and to the said carriage and is capable of folding up the said platform against the ramp, or vice versa, when it is actuated.

13. Device according to any one of the preceding Claims 1 to 12,
characterized in that a motor-operated mechanism (23) is provided inside the said aircraft in order, on the one hand, to transfer the said unit loads (C) from the said platform (15) in the high position into the said aircraft and vice versa, and, on the other hand, to ensure that the assembly consisting of the ramp (12), the slideway (10) and the platform (15) is moved out of or returned into the said aircraft (2).

14. Device according to Claim 13,
characterized in that the said motor-operated mechanism (23) comprises at least one winch (23A) fixed to the inside of the said aircraft, on the side opposite the said opening, and equipped with cables (23C) which are wound around respective pulleys (23D) in order to be fixed respectively on each side of the base of the said ramp (12), when hoisting it into the said aircraft, or to the said unit loads (C) to be transferred.

15. Device according to Claims 9, 10, 11 and 12,
characterized in that the said bearing members (14), the said driving means (16) and the said cylinders (20C, 21) of the deformable-parallelogram mechanisms are controlled by a hydraulic power source (22) provided on the said ramp.

16. Device according to any one of the preceding Claims 1 to 15,
characterized in that rolling members (24A) are associated with the said platform.

## Patentansprüche

1. Hebevorrichtung zum Laden und Entladen von Stückgut durch die Öffnung einer Klappe eines Luftfahrzeugs, die in der Nähe der Öffnung (4) mit der Struktur des Luftfahrzeugs verbunden ist und umfaßt:
- eine Rampe (12) zur schrägen Bodenauflage über Auflageorgane (14);
- eine Tragebühne (15), die gleitend mit der Rampe verbunden ist und die Ladung aufnimmt, und
- Antriebsmittel (16) der Bühne gegenüber der Rampe,
dadurch gekennzeichnet, daß sie eine Schiene (10) hat, die mit der Struktur durch lösbare Verbindungsmittel (11) verbunden werden kann und in der die Rampe (12) geführt wird.

2. Vorrichtung nach Anspruch 1,
dadurch gekennzeichnet, daß sie mit dem unteren Rahmen (4A) als Begrenzung von Öffnung (4) verbunden ist.

3. Vorrichtung nach Anspruch 2,
dadurch gekennzeichnet, daß die lösbaren Mittel (11) zur Verbindung der Schiene mit dem unteren Rahmen aus zylindrischen Gelenken mit Bolzen und Verriegelungshaken bestehen, wobei die Bolzen (17) in Reihe an der Schiene (10) angeordnet sind, während sich die Verriegelungshaken (18) am unteren Rahmen (4A) befinden.

4. Vorrichtung nach Anspruch 1,
dadurch gekennzeichnet, daß sie mit einer starren Bodenauflage (30) auf dem ursprünglichen Boden des Luftfahrzeugs an der Öffnung (4) verbunden ist.

5. Vorrichtung nach Anspruch 4,
dadurch gekennzeichnet, daß die Verbindungsmittel (11) umfassen:
- ein Teil (32), das ein Gelenkvorgelege darstellt und über einen ersten (36) und einen zweiten (37) Bolzen, die jeweils parallel zueinander verlaufen, mit der Bodenauflage und der Schiene verbunden ist;
- Spindeln (34), die das Teil an der Bodenauflage gegen Drehung um den ersten Bolzen blockieren können;
- zwei elastische Pleuelstangen (33) jeweils beiderseits der Schiene und
- Verriegelungsmechanismen (35) der Schiene, die an der Bodenauflage (30) angebracht sind und mit den elastischen Pleuelstangen (33) zusammenwirken, deren Enden jeweils mit den entsprechenden Mechanismen und mit der Schiene über Bolzen (38,39) verbunden sind, die parallel zum ersten und zweiten Bolzen verlaufen.

6. Vorrichtung nach Anspruch 5,
dadurch gekennzeichnet, daß die Verriegelungsmechanismen (35) identisch sind, und dadurch, daß jeder aus einer U-förmigen Auflageplatte (40), deren Grundfläche (40A) an der Bodenauflage befestigt ist und deren Seitenflanken (40B) längliche Öffnungen (40C) haben, in denen der Bolzen der Pleuelstange (33) gleiten kann, und aus Systemen (41) mit Gelenkklinken (42,43) besteht, die durch einen Aktor (44) gesteuert werden und den Bolzen der Pleuelstange an der einen oder anderen abgerundeten Innenseite (40D,40E) der Öffnungen in seiner Lage verriegeln können.

7. Vorrichtung nach einem der Ansprüche 5 oder 6,
dadurch gekennzeichnet, daß die mit den Pleuelstangen verbundenen Verriegelungsmechanismen (35) durch den gleichen Aktor (44) gesteuert werden, wobei eine zum ersten Bolzen (36) koaxiale Verbindungswelle durch die Bodenauflage verläuft und die Verriegelungsmechanismen (35) verbindet.

8. Vorrichtung nach einem der obigen Ansprüche 1 bis 7,
dadurch gekennzeichnet, daß die Schiene (10) einen U-förmigen Querschnitt hat, dessen Grundfläche (10A) mit der Struktur über Verbindungsmittel (11) zusammenwirkt und zwischen dessen Seitenwänden (10B) die Rampe (12) geführt und gehalten wird.

9. Vorrichtung nach einem der obigen Ansprüche 1 bis 8,
dadurch gekennzeichnet, daß die Auflageorgane (14) aus Zylindern (14A) an der Grundfläche (12A) der Rampe bestehen und sich an den Boden (3) anlegen können.

10. Vorrichtung nach einem der obigen Ansprüche 1 bis 9,
dadurch gekennzeichnet, daß die Antriebsmittel (16) der Bühne (15) an der Rampe (12) mindestens einen beweglichen Schlitten (16A) haben, der an den seitlichen Führungen (12D) an der Rampe gleiten kann, um die Bühne aus der unteren in die obere Stellung und umgekehrt zu befördern.

11. Vorrichtung nach Anspruch 10,
dadurch gekennzeichnet, daß die Bühne (15) mit dem beweglichen Schlitten (16A) über mindestens einen verformbaren Parallelogrammmechanismus (20), dessen vier, einander paarweise gegenüberliegende Schwenkbolzen (20A) parallel zur Verbindung der Schiene (10) mit der Struktur des Luftfahrzeugs und senkrecht zur Bewegungsrichtung des Schlittens an der Rampe verlaufen, und über mindestens einen Zylinder (21) oder ähnliches verbunden ist, der den Schlitten mit der Bühne verbindet und durch den verformbaren Parallelogrammechanismus das Heben oder Senken der Bühne an der Rampe ermöglicht.

12. Vorrichtung nach Anspruch 11,
dadurch gekennzeichnet, daß der verformbare Parallelogrammechanismus (20) hinsichtlich seines oberen Schenkels aus einem starren Element (20B), dessen Enden über entsprechende Bolzen (20A) mit der Bühne (15) und mit dem Schlitten (16A) verbunden sind, und hinsichtlich seines unteren Schenkels aus einem Zylinder oder ähnlichem (20C) besteht, der an seinen Enden über zwei weitere Bolzen (20A) an die Bühne und an den Schlitten angelenkt ist und bei Betätigung die Bühne an die Rampe oder umgekehrt anlegen kann.

13. Vorrichtung nach einem der obigen Ansprüche 1 bis 12,
dadurch gekennzeichnet, daß innerhalb des Luftfahrzeugs ein Antriebsmechanismus (23) vorgesehen ist, um einerseits die Lasten (C) der in oberer Stellung befindlichen Bühne (15) in das Luftfahrzeug und umgekehrt zu übernehmen und andererseits die Aufnahme der aus Rampe (12), Schiene (10) und Bühne (15) bestehenden Einheit in das bzw. deren Austritt aus dem Luftfahrzeug (2) zu gewährleisten.

14. Vorrichtung nach Anspruch 13,
dadurch gekennzeichnet, daß der Antriebsmechanismus (23) mindestens eine Winde (23A) hat, die im Luftfahrzeug gegenüber der Öffnung angebracht ist und mit Seilen (23C) ausgerüstet ist, die um entsprechende Seilrollen (23D) verlaufen und jeweils beiderseits der Grundfläche der Rampe (12), wenn diese in das Luftfahrzeug gezogen werden soll, oder an den zu transportierenden Lasten (C) befestigt werden.

15. Vorrichtung nach den Ansprüchen 9, 10, 11 und 12,
dadurch gekennzeichnet, daß die Auflageorgane (14), die Antriebsmittel (16) und die Zylinder (20C,21) der Mechanismen mit verformbarem Parallelogramm durch eine hydraulische Leistungsquelle (22) an der Rampe gesteuert werden.

16. Vorrichtung nach einem der obigen Ansprüche 1 bis 15,
dadurch gekennzeichnet, daß die Bühne mit Rollelementen (24A) versehen ist.
